# EUROPÄISCHE PATENTSCHRIFT

(11) **EP 4 005 370 B1**
(45) Veröffentlichungstag und Bekanntmachung des Hinweises auf die Patenterteilung: **22.01.2025**
(21) Anmeldenummer: 22151646.1
(22) Anmeldetag: 04.07.2017
(51) Int. Cl.: A01G 23/095

(54) **FORSTGERÄTESYSTEM**
FORESTRY SYSTEM
SYSTÈME D'APPAREIL FORESTIER

(43) Veröffentlichungstag der Anmeldung: 01.06.2022
(62) Teilanmeldung aus: 17179674.1
(73) Patentinhaber: Andreas Stihl AG & Co. KG, 71336 Waiblingen (DE)
(72) Erfinder: Mang, Harald, 71364 Winnenden (DE); Frey, Benjamin, 73663 Berglen (DE); Kugel, Steffen, 70736 Fellbach (DE); Tippelt, Martin, 71111 Waldenbuch (DE); Reinert, Michael, 73635 Rudersberg (DE); Hollmeier, Friedrich, 73635 Rudersberg (DE); Jaeger, Dirk, 35116 Hatzfeld (DE); Eppinger, Andreas, 70599 Stuttgart (DE); Krämer Fernandez, Antonio, 70180 Stuttgart (DE); Süpple, Steffen, 70374 Stuttgart (DE); Maier, Bettina, 72072 Tübingen (DE); Eppinger, Florian, 44801 Bochum (DE)
(74) Vertreter: Patentanwälte Ruff, Wilhelm, Beier, Dauster & Partner mbB

(56) Entgegenhaltungen:
- WO-A1-2014/120898
- DE-A1- 4 405 529
- FR-A1- 2 701 628
- US-A1- 2014 238 545

## Beschreibung

### ANWENDUNGSGEBEIT UND STAND DER TECHNIK

Die Erfindung bezieht sich auf ein Forstgerätesystem.

Forstgerätesysteme sind bekannt.

Insbesondere ist aus der US 2014/0238545 A1 ein Harvester aufweisend einen Ausleger und ein mit diesem verbundenes Material-Bearbeitungsgerät bekannt. Das Material-Bearbeitungsgerät weist einen Antriebsmechanismus ausgebildet zum Treiben einer Länge von Material relativ zu dem Material-Bearbeitungsgerät auf. Des Weiteren weist das Material-Bearbeitungsgerät ein erstes Schneidgerät mit einer ersten Schneidkapazität und ein zweites Schneidgerät mit einer zweiten Schneidkapazität auf. Außerdem weist das Material-Bearbeitungsgerät mindestens ein Distanz-Messgerät und mindestens ein Durchmesser-Messgerät auf. Daten bezüglich der Länge und Durchmesser an einer Mehrzahl von Punkten des Materials werden empfangen und verwendet, um mindestens eine Schneidposition entlang der Länge zu bestimmen. Der Durchmesser der Länge des Materials an der Schneidposition wird bestimmt und verwendet, um entweder das erste Schneidgerät oder zweite Schneidgerät zum Verwenden beim Durchführen eines Schnitts an der Schneidposition basierend auf der Schneidkapazität jedes Schneidgeräts auszuwählen.

Des Weiteren ist aus der DE 44 05 529 A1 eine automatische Vorrichtung für das Entasten und/oder für das Entrinden von stehenden Bäumen bekannt. Die Vorrichtung besteht aus einem Gestell, wobei auf dem Gestell angeordnet sind: Einrichtungen für den Antrieb und für das Feststellen, die mit mindestens einem Rad versehen sind, und eine Schneidvorrichtung, die ein Schneidgerät trägt. Es sind Einrichtungen für eine Messung einer Lage des Schneidgeräts gegenüber dem Baumstamm und Einrichtungen für eine Anpassung der Lage zum Halten des Schneidgeräts in einer optimalen Arbeitsposition vorgesehen.

Das Dokument US 8 517 066 B1 zeigt ein weiteres Beispiel für ein Forstgerätesystem.

### AUFGABE UND LÖSUNG

Der Erfindung liegt als Aufgabe die Bereitstellung eines Forstgerätesystems zugrunde, das verbesserte Eigenschaften aufweist, insbesondere mehr Funktionalitäten.

Die Erfindung löst diese Aufgabe durch die Bereitstellung eines Forstgerätesystems mit den Merkmalen des Anspruchs 1. Vorteilhafte Weiterbildungen und/oder Ausgestaltungen der Erfindung sind in den abhängigen Ansprüchen beschrieben.

Das erfindungsgemäße, insbesondere automatische, Forstgerätesystem weist ein, insbesondere automatisches, Forstgerät auf. Das Forstgerät weist eine Bewegungseinrichtung, ein Bearbeitungswerkzeug und eine Messeinrichtung auf. Die Bewegungseinrichtung ist zum, insbesondere automatischen, selbstständigen oder eigenständigen Bewegen, insbesondere Klettern, des Forstgeräts entlang mindestens eines Abschnitts eines stehenden, insbesondere lebenden, Baumstamms ausgebildet, wobei das Forstgerät nicht an einem Auslegearm entlang des Abschnitts bewegt ist. Das Bearbeitungswerkzeug ist zum, insbesondere automatischen, Bearbeiten des Abschnitts ausgebildet. Die Messeinrichtung ist zum, insbesondere automatischen, Messen von, insbesondere mehreren, geometrischen Kenngrößen, insbesondere ihren Werten beziehungsweise Beträgen, des Abschnitts ausgebildet. Das Forstgerätesystem ist zum Ausgeben und/oder zum Übertragen mindestens einer auf den gemessenen geometrischen Kenngrößen basierenden Information ausgebildet.

Das Forstgerätesystem ermöglicht eine Aushaltungsermittlung, insbesondere durch einen Forstarbeiter. Anders formuliert ermöglicht das Forstgerätesystem zu ermitteln, wie der Abschnitt derart verarbeitet kann und/oder sollte, dass ein maximaler wirtschaftlicher Gewinn erzielt werden kann.

Das Forstgerät kann auf Englisch als self-propelled climbing tree trimmer bezeichnet werden. Die Bewegungseinrichtung kann einen Antriebsmotor zum Bewegen aufweisen. Zusätzlich oder alternativ kann die Bewegungseinrichtung dazu ausgebildet sein, in Kontakt mit dem Abschnitt zu sein und/oder diesen zu berühren, insbesondere in diesen einzugreifen. Das Bearbeitungswerkzeug kann einen, insbesondere anderen, Antriebsmotor zum Bearbeiten aufweisen. Insbesondere kann das Forstgerät dazu ausgebildet sein, sich entlang des Abschnitts soweit zu bewegen und diesen zu bearbeiten und optional nicht weiter, bis eine Sicherheitsgrenze des Forstgeräts erreicht sein kann. Die Sicherheitsgrenze kann einen minimalen Durchmesser des Abschnitts aufweisen, der für eine Stabilität des Forstgeräts notwendig sein kann. Dies kann weiter als bei einer Wertastung sein, bei welcher in der Regel eine belassene grüne Krone noch mindestens vierzig Prozent einer Gesamtbaumlänge betragen sollte. Der minimale Durchmesser kann einen Wert beziehungsweise einen Betrag von minimal 20 Zentimeter (cm) aufweisen, insbesondere von minimal 10 cm, insbesondere von minimal 5 cm. Insbesondere kann das Bearbeitungswerkzeug zum Durchtrennen und/oder Fällen des Baumstamms ausgebildet sein. Zumindest zum Durchtrennen an einem oberen Ende des Abschnitts, so dass ein Baumzopf, soweit vorhanden, von dem Abschnitt entfernt werden kann. Des Weiteren kann das Forstgerät für einen maximalen Durchmesser von maximal 50 cm ausgebildet sein, insbesondere von maximal 100 cm, insbesondere von maximal 200 cm.

Das Forstgerät kann das Bearbeiten des Abschnitts während des Entlangbewegens ermöglichen, insbesondere während eines Hochbewegens. Des Weiteren kann das Forstgerät das Messen des Abschnitts während des Entlangbewegens und/oder während des Bearbeitens ermöglichen, insbesondere während des Hochbewegens.

Das Forstgerät kann als, insbesondere autonomer, Roboter bezeichnet werden. Autonom kann bedeuten, dass das Forstgerät dazu ausgebildet sein kann, sich entlang des Abschnitts selbstbestimmt, selbstgesteuert und/oder unabhängig von dem Forstarbeiter zu bewegen und/oder den Abschnitt selbstbestimmt zu bearbeiten und/oder den Abschnitt selbstbestimmt zu messen. In anderen Worten: das Forstgerät kann dazu ausgebildet sein ohne menschliche Steuerung und/oder Führung zu agieren.

Zusätzlich oder alternativ kann das Forstgerätesystem eine, insbesondere kabellose beziehungsweise drahtlose, Fernsteuerung aufweisen, mittels welcher der Forstarbeiter das Forstgerät beziehungsweise seine Bewegungseinrichtung und/oder sein Bearbeitungswerkzeug und/oder seine Messeinrichtung zumindest Notabschalten oder sogar manuell steuern kann.

Das Forstgerätesystem kann eine Ausgabe- und/oder Übertragungseinrichtung aufweisen, die zum Ausgeben und/oder zum Übertragen der mindestens einen Information ausgebildet sein kann. Insbesondere kann das Forstgerät zum Ausgeben und/oder zum Übertragen der mindestens einen Information ausgebildet sein. Die mindestens eine Information kann an den Forstarbeiter ausgegeben werden. Zusätzlich oder alternativ kann die mindestens eine Information an eine Datenbank und/oder ein Netzwerk und/oder einen Hub und/oder eine Cloud und/oder ähnliches übertragen werden, insbesondere an das Internet. Die mindestens eine Information kann die gemessenen geometrischen Kenngrößen aufweisen. Die geometrischen Kenngrößen beziehungsweise ihre Werte können vor dem Messen unbekannt sein und/oder brauchen nicht vorgegebenen Kenngrößen beziehungsweise vorgegeben Werten zu entsprechen und/oder können von diesen verschieden sein. Insbesondere können die geometrischen Kenngrößen miteinander in einem Zusammenhang stehen und/oder in einer Beziehung zueinander stehen.

Die Messeinrichtung weist mindestens ein optisches Messteil auf. Das optische Messteil ist zum, insbesondere automatischen, optischen Messen der geometrischen Kenngrößen des Abschnitts ausgebildet. Zusätzlich kann das optische Messteil dazu ausgebildet sein, eine Oberflächenbeschaffenheit des Abschnitts und somit seinen Gesundheitszustand oder Schäden, insbesondere Holzschäden, und/oder seine Baumart, insbesondere automatisch, optisch zu erfassen. Schäden können mechanische Schäden, einen Schädlingsbefall und/oder Fäule aufweisen oder sein. Insbesondere kann das optische Messteil dazu ausgebildet sein, mindestens ein Bild, insbesondere mehrere Bilder, des Abschnitts aufzunehmen und aus dem mindestens einen aufgenommenen Bild die geometrischen Kenngrößen zu ermitteln, insbesondere mittels Bildverarbeitung, insbesondere mittels Photogrammetrie. Das optische Messteil kann eine Kamera aufweisen oder sein. Die Kamera kann eine Stereokamera und/oder eine TOF-Kamera für Tiefeninformation aufweisen. TOF-Kameras sind 3D-Kamerasysteme, die mit dem Laufzeitverfahren (Englisch: time of flight) Distanzen messen können. Vorteilhafterweise kann eine Position und/oder eine Orientierung beziehungsweise eine Ausrichtung des optischen Messteils, insbesondere mittels der Bewegungseinrichtung, erfasst werden und beim optischen Messen miteinfließen.

Das Forstgerätesystem ist zum, insbesondere automatischen, Erfassen einer Verteilung von Ästen, soweit vorhanden, an dem Abschnitt mittels der Messeinrichtung und/oder des Schneidwerkzeugs ausgebildet. Insbesondere kann die Verteilung von Ästen als Astigkeit bezeichnet werden. Insbesondere kann die Messeinrichtung das optische Messteil aufweisen und die Verteilung von Ästen kann mittels des optischen Messteils optisch erfasst werden. Die Verteilung von Ästen kann mittels des Schneidwerkzeugs mittels Messens einer Leistungsaufnahme des Schneidwerkzeugs oder seines Antriebsmotors, soweit vorhanden, erfasst werden. Vorteilhafterweise kann eine Position und/oder eine Orientierung beziehungsweise eine Ausrichtung der Messeinrichtung und/oder des Schneidwerkzeugs, insbesondere mittels der Bewegungseinrichtung, erfasst werden und beim Erfassen der Verteilung von Ästen miteinfließen.

In einer Weiterbildung der Erfindung weist das Bearbeitungswerkzeug ein Schneidwerkzeug auf. Das Schneidwerkzeug ist zum, insbesondere automatischen, Entfernen von Ästen, soweit vorhanden, von dem Abschnitt ausgebildet. Das Entfernen von Ästen kann ermöglichen, dass sich das Forstgerät entlang des Abschnitts bewegen, insbesondere weiterbewegen, kann. Denn je nach Ausgestaltung der Äste könnten diese dem Forstgerät im Weg sein. Zusätzlich oder alternativ kann das Entfernen von Ästen ermöglichen, beispielsweise den Forstarbeiter zu unterstützen, indem dieser nicht mehr die Äste zu entfernen braucht. In anderen Worten: das Schneidwerkzeug kann zum Entasten des Abschnitts ausgebildet sein. Das Forstgerät kann als Entastungsroboter bezeichnet werden. Des Weiteren kann das Schneidwerkzeug zum, insbesondere automatischen, Durchtrennen und/oder Fällen des Baumstamms ausgebildet sein.

In einer Ausgestaltung weist das Schneidwerkzeug eine Säge auf. Insbesondere kann die Säge eine Motorsäge und/oder eine Kettensäge aufweisen oder sein.

In einer Weiterbildung der Erfindung weisen die geometrischen Kenngrößen mindestens eine Länge, insbesondere mehrere Längen, mindestens einen Durchmesser, insbesondere mehrere Durchmesser, mindestens einen Umfang, insbesondere mehrere Umfänge, mindestens eine Ovalität, insbesondere mehrere Ovalitäten, mindestens eine Krümmung, insbesondere mehrere Krümmungen, und/oder mindestens eine Kontur, insbesondere mehrere Konturen, des Abschnitts auf. Diese geometrischen Kenngrößen beziehungsweise ihre Werte ermöglichen die Aushaltungsermittlung. Insbesondere können diese geometrischen Kenngrößen eine Erstellung eines dreidimensionalen Modells des Abschnitts ermöglichen.

In einer Weiterbildung der Erfindung weist das Forstgerätesystem eine Einteilungseinrichtung auf. Die Einteilungseinrichtung ist zum, insbesondere automatischen, Einteilen des Abschnitts in Unterabschnitte basierend auf den gemessenen geometrischen Kenngrößen und basierend auf Wertfaktoren ausgebildet. Die mindestens eine Information weist die eingeteilten Unterabschnitte und/oder ihre Einteilung auf. Somit kann das Forstgerätesystem die Aushaltungsermittlung selbst ausführen. Zusätzlich kann die Einteilungseinrichtung zum Einteilen des Abschnitts in Unterabschnitte basierend auf ihren Oberflächenbeschaffenheiten, soweit erfasst, ausgebildet sein. Die Wertfaktoren können verschiedene Qualitätspreise pro Länge und/oder für eine Mindestlänge und/oder pro Fläche und/oder für eine Mindestfläche und/oder pro Volumen und/oder pro Mindestvolumen und/oder für einen Gesundheitszustand und/oder für eine Baumart aufweisen oder sein. Insbesondere in Folge dessen, können die Unterabschnitte verschiedene Längen aufweisen. Die Wertfaktoren beziehungsweise ihre Werte oder Beträge können vorgebbar sein, insbesondere mittels einer Eingabeeinrichtung der Einteilungseinrichtung durch einen Forstarbeiter und/oder ein Forstwirtschaftssystem. Insbesondere kann das Forstgerät die Einteilungseinrichtung aufweisen.

In einer Ausgestaltung der Erfindung ist die Einteilungseinrichtung zum, insbesondere automatischen, Einteilen des Abschnitts in die Unterabschnitte basierend auf der erfassten Verteilung von Ästen ausgebildet. Die Verteilung von Ästen kann ein Teil eines Wertfaktors oder ein Wertfaktor sein.

In einer Weiterbildung der Erfindung ist das Forstgerätesystem dazu ausgebildet, die mindestens eine Information durch, insbesondere automatisches, Versehen des Abschnitts mit mindestens einer Markierung, insbesondere mehreren Markierungen, auszugeben. Dies ermöglicht die optische Wahrnehmung der mindestens einen Information am Abschnitt selbst. Insbesondere kann die mindestens eine Markierung mindestens eine Schnittlinie oder einen Schnittverlauf für mindestens einen auszuführenden Trennschnitt zum Durchtrennen des Baumstamms aufweisen, insbesondere für die Unterabschnitte und/oder ihre Einteilung, soweit eingeteilt. Zusätzlich oder alternativ kann die mindestens eine Markierung mindestens eine Schnittlinie oder einen Schnittverlauf für mindestens einen auszuführenden Schnitt zum Fällen des Baumstamms aufweisen. Insbesondere kann der mindestens eine auszuführende Schnitt zum Fällen einen Fallkerbsohlenschnitt, einen Fallkerbdachschnitt und/oder einen Fällschnitt aufweisen.

In einer Ausgestaltung der Erfindung ist das Bearbeitungswerkzeug dazu ausgebildet, den Abschnitt mit der mindestens einen Markierung durch, insbesondere automatisches, Bearbeiten von dem Abschnitt zu versehen. Somit ist keine weitere Einrichtung zum Versehen des Abschnitts mit der mindestens einen Markierung notwendig. Insbesondere kann eine Rinde des Baumstamms bearbeitet werden.

In einer Ausgestaltung der Erfindung weist das Forstgerätesystem eine Farbaufbringeinrichtung auf. Die Farbaufbringeinrichtung ist zum Versehen des Abschnitts mit der mindestens einen Markierung durch, insbesondere automatisches, Aufbringen, insbesondere Aufsprühen, von Farbe auf den Abschnitt ausgebildet. Insbesondere kann das Forstgerät die Farbaufbringeinrichtung aufweisen.

In einer Weiterbildung der Erfindung weist das Forstgerätesystem, insbesondere mindestens, eine Ausgabeeinrichtung auf. Die Ausgabeeinrichtung ist zum, insbesondere automatischen, Ausgeben der mindestens einen Information und zum Tragen am Körper eines Forstarbeiters und/oder zum Anordnen an einem, insbesondere handgetragenen, Forstwerkzeug ausgebildet ist. Insbesondere kann das Forstwerkzeug ein Schneidwerkzeug aufweisen oder sein, insbesondere eine Säge. Insbesondere kann das Forstgerätesystem das Forstwerkzeug aufweisen. Insbesondere kann die Ausgabeeinrichtung ein Smartphone aufweisen. Insbesondere kann das Forstgerät eine Gerätübertragungseinrichtung aufweisen und die Ausgabeeinrichtung kann eine Ausgabeübertragungseinrichtung aufweisen, die zum Zusammenwirken miteinander und zum, insbesondere kabellosen beziehungsweise drahtlosen, Übertragen der gemessenen geometrischen Kenngrößen und/oder der mindestens einen auf den gemessenen geometrischen Kenngrößen basierenden Information ausgebildet sein können.

In einer Ausgestaltung der Erfindung weist das Forstgerätesystem einen Schutzhelm, einen Gesichts- und/oder Gehörschutz, eine Schutzbrille, einen Schutzhandschuh, eine Smartwatch, ein Armband oder einen Armreif auf, an welchem/welcher die Ausgabeeinrichtung angeordnet ist. Dies ermöglicht das Tragen der Ausgabeeinrichtung am Körper des Forstarbeiters.

In einer Ausgestaltung der Erfindung weist die Ausgabeeinrichtung eine Anzeige, eine Vibrationseinrichtung und/oder einen Schallerzeuger auf oder ist ein/e solche/r. Insbesondere kann die Anzeige dazu ausgebildet sein, die mindestens eine Information in einem Sichtfeld des Forstarbeiters, insbesondere vor dem Abschnitt, anzuzeigen und/oder in dieses zu projizieren oder einzublenden, insbesondere bei einem Verarbeiten des Abschnitts durch den Forstarbeiter. Die Anzeige kann auf Englisch als Head-up-Display bezeichnet werden. Dies kann auf Englisch als Virtual Reality und/oder als Augmented Reality bezeichnet werden. Insbesondere kann die Anzeige dazu ausgebildet sein, die mindestens eine Information auf einem Visier des Schutzhelms, des Gesichts- und/oder Gehörschutz und/oder der Schutzbrille, soweit vorhanden, anzuzeigen oder in diese zu projizieren. Die Anzeige kann auf Englisch als Head-mounted-Display bezeichnet werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Forstgerätesystems mit einem Forstgerät an einem Abschnitt eines stehenden Baumstamms,
- Fig. 2: eine Längsschnittansicht des Forstgerätesystems der Fig. 1,
- Fig. 3: eine Querschnittansicht des Abschnitts der Fig. 1,
- Fig. 4: eine weitere Perspektivansicht des Forstgerätesystems nach einem Bearbeiten und Messen des Abschnitts der Fig. 1 und
- Fig. 5: eine weitere Perspektivansicht des Forstgerätesystems der Fig. 1 bei einem Verarbeiten eines Abschnitts.

### DETAILLIERTE BESCHREIBUNG DER AUSFÜHRUNGSBEISPIELE

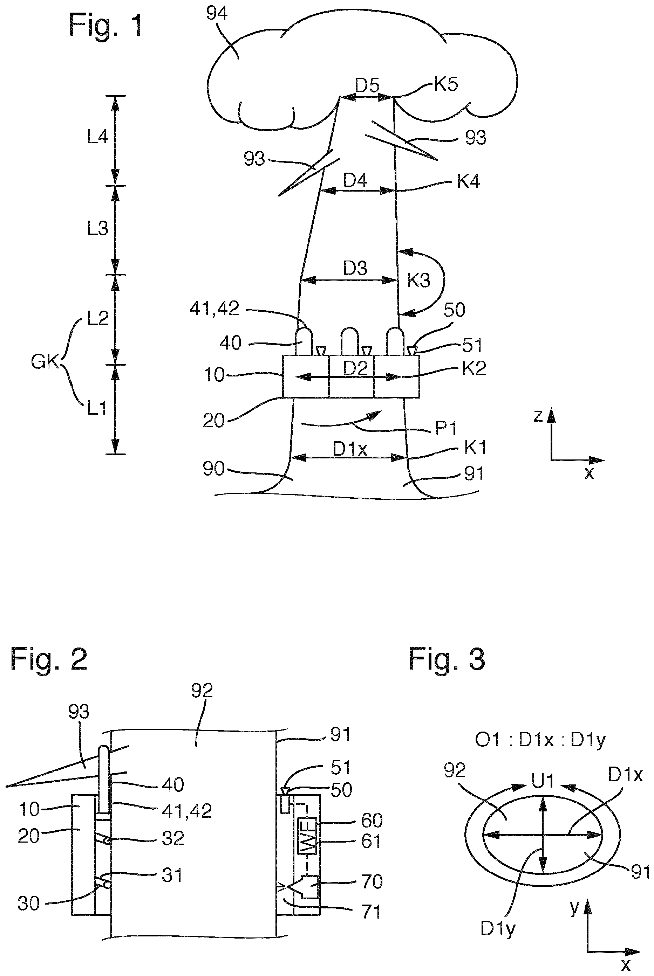

Fig. 1 bis 5 zeigen ein erfindungsgemäßes Forstgerätesystem 10. Das Forstgerätesystem 10 weist ein Forstgerät 20 auf. Das Forstgerät 20 weist eine Bewegungseinrichtung 30, ein Bearbeitungswerkzeug 40 und eine Messeinrichtung 50 auf. Die Bewegungseinrichtung 30 ist zum selbständigen Bewegen des Forstgeräts 20 entlang mindestens eines Abschnitts 92 eines stehenden Baumstamms 91, insbesondere eines Baums 90, ausgebildet. Das Bearbeitungswerkzeug 40 ist zum Bearbeiten des Abschnitts 92 ausgebildet. Die Messeinrichtung 50 ist zum Messen von geometrischen Kenngrößen GK des Abschnitts 92 ausgebildet. Das Forstgerätesystem 10 ist zum Ausgeben mindestens einer auf den gemessenen geometrischen Kenngrößen GK basierenden Information Info ausgebildet. In alternativen Ausführungsbeispielen kann das Forstgerätesystem zusätzlich oder alternativ zum Übertragen der mindestens einen Information ausgebildet sein.

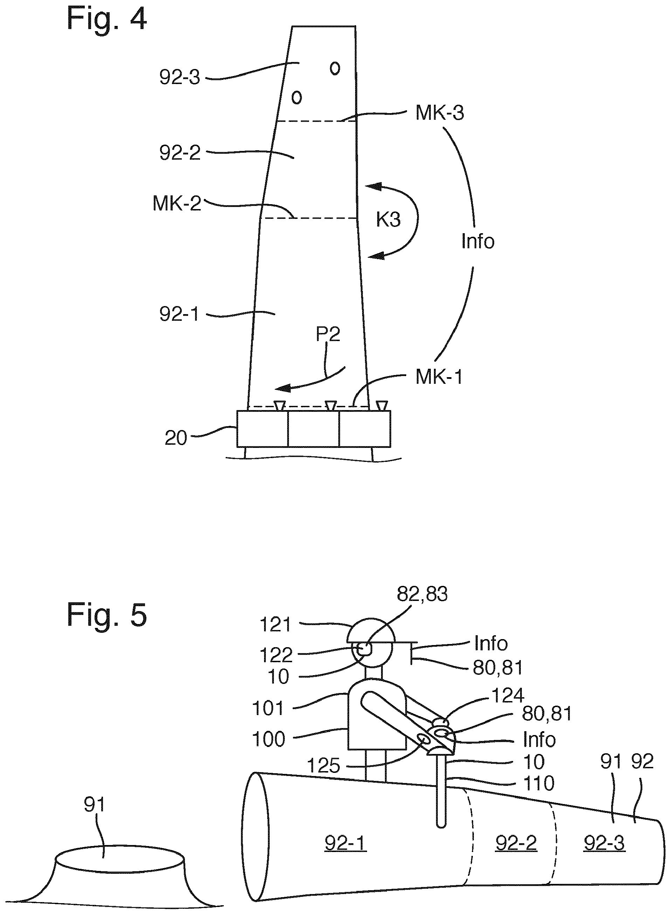

Im gezeigten Ausführungsbeispiel ist die Bewegungseinrichtung 30 dazu ausgebildet, den Abschnitt 92 des stehenden Baumstamms 91 zu berühren, insbesondere in eine Rinde des Baumstamms 91 einzugreifen. Im Detail weist die Bewegungseinrichtung 30 Räder 31 mit Spikes 32 auf, deren Drehachsen am Baumstamm 91 nahezu parallel zu einer Längsachse des Baumstamms 91 angeordnet sind, wie in Fig. 2 zu erkennen. Des Weiteren weist die Bewegungseinrichtung 30 einen nicht dargestellten Antriebsmotor zum Bewegen der Räder 31 auf. Somit kann sich das Forstgerät 20 entlang des Abschnitts 92 an diesem schraubenlinienförmig nach oben bewegen, wie in Fig. 1 durch einen Pfeil P1 angedeutet, und anschließend nach unten bewegen, wie in Fig. 4 durch einen Pfeil P2 angedeutet. In alternativen Ausführungsbeispielen kann die Bewegungseinrichtung auf andere Art und Weise ausgebildet sein.

Im Detail weist das Bearbeitungswerkzeug 40 ein Schneidwerkzeug 41 in Form einer, insbesondere motorangetriebenen, Säge auf. Im gezeigten Ausführungsbeispiel der Fig. 1 sind drei Schneidwerkzeuge zu erkennen. In alternativen Ausführungsbeispielen kann das Bearbeitungswerkzeug ein einziges Schneidwerkzeug, zwei Schneidwerkzeuge oder mehr als drei Schneidwerkzeuge aufweisen. Das Schneidwerkzeug 41 ist zum Entfernen von Ästen 93 von dem Abschnitt 92 ausgebildet, wie in Fig. 2 zu erkennen. Somit ermöglicht das Forstgerät 20 das Bearbeiten, insbesondere ein Entasten, des Abschnitts 92 während des Entlangbewegens an diesem, insbesondere während des schraubenlinienförmigen nach oben Bewegens.

Des Weiteren ermöglicht das Forstgerät 20 das Messen der geometrischen Kenngrößen GK des Abschnitts 92, insbesondere während des Entlangbewegens an diesem und/oder des Bearbeitens von diesem. Im Detail weist die Messeinrichtung 50 mindestens ein optisches Messteil 51 in Form einer Kamera auf. Im gezeigten Ausführungsbeispiel der Fig. 1 sind drei optische Messteile zu erkennen. In alternativen Ausführungsbeispielen kann die Messeinrichtung ein einziges optisches Messteil, zwei optische Messteile oder mehr als drei optische Messteile aufweisen. Das optische Messteil 51 ist zum optischen Messen der geometrischen Kenngrößen GK des Abschnitts 92 ausgebildet. Zusätzlich ist das optische Messteil 51 dazu ausgebildet, eine Oberflächenbeschaffenheit des Abschnitts 92 und somit seinen Gesundheitszustand oder Schäden und seine Baumart optisch zu erfassen. Durch das schraubenlinienförmige nach oben Bewegen des Forstgeräts 20 an dem Abschnitt 92 wird dieser von den Kameras vollumfänglich gemessen.

Im Detail weisen die geometrischen Kenngrößen GK mindestens eine Länge L1, L2, L3, L4, mindestens einen Durchmesser D1x, D1y, D2, D3, D4, D5, mindestens einen Umfang U1, mindestens eine Ovalität 01 und mindestens eine Krümmung K1, K2, K3, K4, K5 des Abschnitts 92 auf. In alternativen Ausführungsbeispielen brauchen die geometrischen Kenngrößen nicht alle dieser spezifischen Kenngrößen aufzuweisen und/oder können zusätzlich oder alternativ mindestens eine Kontur des Abschnitts aufweisen. Die geometrischen Kenngrößen GK hängen miteinander zusammen. Im Detail sind die Durchmesser D1x, D1y in zueinander senkrechten Richtungen, wie in Fig. 3 zu erkennen, an einem in Fig. 1 unteren Ende des Abschnitts 92 gemessen. Auf gleicher Höhe sind der mindestens eine Umfang U1 und die mindestens eine Ovalität O1, die ein Verhältnis des Durchmessers D1x zu dem Durchmesser D1y beschreibt, gemessen. Weiter ist auf gleicher Höhe die Krümmung K1 des Abschnitts 92 gemessen. Nach einer gemessenen Länge L1 entlang des Abschnitts 92 in Fig. 1 nach oben sind der Durchmesser D2 und die Krümmung K2 des Abschnitts 92 gemessen. Nach einer gemessenen Länge L2 sind ein Durchmesser D3 und eine Krümmung K3 gemessen. Nach einer gemessenen Länge L3 sind ein Durchmesser D4 und eine Krümmung K4 gemessen. Nach einer gemessenen Länge L4 und an einem in Fig. 1 oberen Ende des Abschnitts 92 sind ein Durchmesser D5 und eine Krümmung K5 gemessen. Wie in Fig. 1 zu erkennen, ist der Abschnitt 92 nach der gemessenen Länge L2 und vor der gemessenen Länge L3 nach rechts gekrümmt, wie durch die gemessene Krümmung K3 beschrieben wird.

Im gezeigten Ausführungsbeispiel weisen die gemessenen geometrischen Kenngrößen GK fünf Krümmungen K1, K2, K3, K4, K5 auf. In alternativen Ausführungsbeispielen können die geometrischen Kenngrößen spezifische Kenngrößen in Form von mindestens zwei Krümmungen, insbesondere mindestens drei Krümmungen oder insbesondere mindestens mehr als fünf Krümmungen aufweisen. Das für die spezifischen Kenngrößen in Form von Krümmungen zuvor Geschriebene gilt auch für die anderen spezifischen Kenngrößen in Form von Länge, Durchmesser, Umfang, Ovalität und/oder Kontur. Im gezeigten Ausführungsbeispiel ermöglichen diese geometrischen Kenngrößen GK eine Erstellung eines dreidimensionalen Modells des Abschnitts 92.

Insbesondere durch Messen der geometrischen Kenngrößen GK des Abschnitts 92 ist das Forstgerät 20 dazu ausgebildet, sich entlang des Abschnitts 92 so weit zu bewegen und diesen zu bearbeiten und nicht weiter, bis eine Sicherheitsgrenze des Forstgeräts 20 erreicht ist. Die Sicherheitsgrenze weist im gezeigten Ausführungsbeispiel einen minimalen Durchmesser des Abschnitts 92 auf, der für eine Stabilität des Forstgeräts 20 notwendig ist. Im gezeigten Ausführungsbeispiel entspricht der minimale Durchmesser dem gemessenen Durchmesser D5 und definiert das in Fig. 1 und 4 obere Ende des Abschnitts 92. Das untere Ende des Abschnitts 92 kann durch einen maximalen Durchmesser des Baumstamms 91 und/oder Wurzelanläufe des Baums 90 und/oder einen Umgebungsboden definiert sein.

Außerdem ist im gezeigten Ausführungsbeispiel das Bearbeitungswerkzeug 40 zum Durchtrennen des Baumstamms 91 zumindest am oberen Ende des Abschnitts 92 ausgebildet. Somit ermöglicht das Forstgerät 20 ein Entfernen eines Baumzopfs 94 des Baums 90 von dem Abschnitt 92. In alternativen Ausführungsbeispielen kann das Bearbeitungswerkzeug zusätzlich oder alternativ zum Fällen des Baumstamms ausgebildet sein. Im Detail ist das Schneidwerkzeug 41 in Form der Sägen 42 zum Durchtrennen des Baumstamms 91 ausgebildet. Die Sägen 42 sind von einer senkrechten Astentfernungsorientierung in eine waagrechte Baumzopfentfernungsorientierung drehbar.

Weiter ist das Forstgerät 20 dazu ausgebildet, sich nach dem nach oben Bewegen am Abschnitt 92, dem Entfernen der Äste 93 und des Baumzopfs 94 und dem Messen der geometrischen Kenngrößen GK anschließend selbständig wieder nach unten zu bewegen.

Zudem weist das Forstgerätesystem 10 beziehungsweise sein Forstgerät 20 eine Einteilungseinrichtung 60 auf. Die Einteilungseinrichtung 60 ist zum Einteilen des Abschnitts 92 in Unterabschnitte 92-1, 92-2, 92-3 basierend auf den gemessenen geometrischen Kenngrößen GK und basierend auf Wertfaktoren WF ausgebildet. Die mindestens eine Information Info weist die eingeteilten Unterabschnitte 92-1, 92-2, 92-3 beziehungsweise ihre Einteilung auf. Somit führt das Forstgerätesystem 10 eine Aushaltungsermittlung selbst aus. Des Weiteren ist die Einteilungseinrichtung 60 zum Einteilen des Abschnitts 92 in Unterabschnitte 92-1, 92-2, 92-3 basierend auf ihren erfassten Oberflächenbeschaffenheiten ausgebildet.

Außerdem ist das Forstgerätesystem 10 beziehungsweise sein Forstgerät 20 zum Erfassen einer Verteilung von Ästen 93 an dem Abschnitt 92 mittels der Messeinrichtung 50 und des Schneidwerkzeugs 41 ausgebildet. In alternativen Ausführungsbeispielen kann es ausreichen, wenn das Forstgerätesystem zum Erfassen der Verteilung von Ästen mittels entweder der Messeinrichtung oder des Schneidwerkzeugs ausgebildet sein kann. Im gezeigten Ausführungsbeispiel weist die Messeinrichtung 50 das mindestens eine optische Messteil 51 auf und die Verteilung von Ästen 93 kann mittels des mindestens einen optischen Messteils 51 optisch erfasst werden. Die Verteilung von Ästen 93 kann mittels des Schneidwerkzeugs 41 durch Messen einer Leistungsaufnahme des Schneidwerkzeugs 41 oder seines Antriebsmotors erfasst werden. Wie in Fig. 1 zu erkennen, weist der Abschnitt 92 nach der gemessenen Länge L3 und vor der gemessenen Länge L4 kaum oder keine Äste 93 auf. Über die gemessene Länge L4 weist der Abschnitt 92 viele Äste 93 auf. Die Einteilungseinrichtung 60 ist zum Einteilen des Abschnitts 92 in die Unterabschnitte 92-1, 92-2, 92-3 basierend auf der erfassten Verteilung von Ästen 93 ausgebildet. Die Verteilung von Ästen kann ein Teil eines Wertfaktors oder ein Wertfaktor sein.

Die Wertfaktoren WF sind vorgebbar. Insbesondere weist die Einteilungseinrichtung 60 eine Eingabeeinrichtung 61 auf, mittels der ein Forstarbeiter 100 und/oder ein Forstwirtschaftssystem die Wertfaktoren WF vorgeben können.

Im gezeigten Ausführungsbeispiel ist der Abschnitt 92 in drei Unterabschnitte 92-1, 92-2, 92-3 eingeteilt. In alternativen Ausführungsbeispielen kann der Abschnitt in nur einen einzigen Unterabschnitt, in zwei Unterabschnitte oder in mehr als drei Unterabschnitte eingeteilt sein. Im gezeigten Ausführungsbeispiel ist die Einteilung des Abschnitts 92 derart erfolgt, dass der Unterabschnitt 92-1 keine oder kaum Äste 93 aufweist beziehungsweise aufgewiesen hat, der Unterabschnitt 92-2 von dem Unterabschnitt 92-1 durch die Krümmung K3 getrennt ist und kaum oder keine Äste 93 aufweist beziehungsweise aufgewiesen hat und der Unterabschnitt 92-3 viele Äste 93 aufweist beziehungsweise aufgewiesen hat.

Weiter ist das Forstgerätesystem 10 beziehungsweise sein Forstgerät 20 dazu ausgebildet, die mindesten eine Information Info durch Versehen des Abschnitts 92 mit mindestens einer Markierung MK-1, MK-2, MK-3 auszugeben. Im gezeigten Ausführungsbeispiel weist die mindestens eine Markierung MK-1, MK-2, MK-3 drei Schnittlinien für drei auszuführende Trennschnitte zum Durchtrennen des Baumstamms 91 beziehungsweise seines Abschnitts 92 auf. Insbesondere trennt die Markierung MK-3 die Unterabschnitte 92-2 und 92-3. Die Markierung MK-2 trennt die Unterabschnitte 92-2 und 92-1. Die Markierung MK-1 trennt den Unterabschnitt 92-1 von einem Rest des Baumstamms 91. Die mindestens eine optische Markierung MK-1, MK-2, MK-3 ermöglicht die optische Wahrnehmung der mindestens einen Information Info am Abschnitt 92 selbst, insbesondere für ein Verarbeiten des Abschnitts 92 durch den Forstarbeiter 100.

Im gezeigten Ausführungsbeispiel wird der Abschnitt 92 in die Unterabschnitte 92-1, 92-2, 92-3 mittels der Einteilungseinrichtung 60 eingeteilt, wenn das Forstgerät 20 am oberen Ende des Abschnitts 92 ist. Beim nach unten bewegen wird der Abschnitt 92 mit der mindestens einen Markierung MK-1, MK-2, MK-3 versehen.

Im Detail ist das Bearbeitungswerkzeug 40 dazu ausgebildet, den Abschnitt 92 mit der mindestens einen Markierung MK-1, MK-2, MK-3 durch Bearbeiten des Abschnitts 92 zu versehen. Im gezeigten Ausführungsbeispiel sind die in die waagrechte Baumzopfentfernungsorientierung gedrehten Sägen 42 dazu ausgebildet, in eine Rinde des Baumstamms 91 zu schneiden.

Zudem weist das Forstgerätesystem 10 beziehungsweise sein Forstgerät 20 eine Farbaufbringeinrichtung 70 auf. Die Farbaufbringeinrichtung 70 ist zum Versehen des Abschnitts 92 mit der mindestens einen Markierung MK-1, MK-2, MK-3 durch Aufbringen, insbesondere Aufsprühen, von Farbe 71 auf den Abschnitt 92 ausgebildet.

In alternativen Ausführungsbeispielen kann es ausreichen, wenn entweder das Bearbeitungswerkzeug zum Versehen des Abschnitts mit der mindestens einen Markierung ausgebildet sein kann oder das Forstgerätesystem die Farbaufbringeinrichtung aufweisen kann.

Das Forstgerät 20 kann als, insbesondere autonomer, Roboter bezeichnet werden. Im gezeigten Ausführungsbeispiel ist das Forstgerät 20 dazu ausgebildet, nach einem Anordnen an dem Baumstamm 91 beziehungsweise seinem Abschnitt 92 und einem Startsignal durch den Forstarbeiter 100 sich entlang des Abschnitts 92 selbstbestimmt zu bewegen, den Abschnitt 92 selbstbestimmt zu bearbeiten, den Abschnitt 92 selbstbestimmt zu messen und zusätzlich den Abschnitt 92 selbstbestimmt in die Unterabschnitte 92-1, 92-2, 92-3 einzuteilen und den Abschnitt 92 mit der mindestens einen Markierung MK-1, MK-2, MK-3 zu versehen.

Fig. 5 zeigt einen weiteren Abschnitt 92 eines weiteren Baumstamms 91. In Fig. 5 ist der Baumstamm 91 beziehungsweise sein Abschnitt 92 gefällt, insbesondere liegend. Vor dem Fällen ist der Abschnitt 92 mittels des Forstgeräts 20 bearbeitet und gemessen worden. Insbesondere sind Äste und ein Baumzopf mittels des Forstgeräts 20 entfernt worden. Jedoch ist der Abschnitt 92 nicht mit Markierungen versehen worden.

Das Forstgerätesystem 10 weist mindestens eine Ausgabeeinrichtung 80 auf, im gezeigten Ausführungsbeispiel zwei Ausgabeeinrichtungen 80. Des Weiteren weist das Forstgerätesystem 10 ein Forstwerkzeug 110 auf. Die eine Ausgabeeinrichtung 80 ist zum Ausgeben der mindestens einen Information Info und zum Tragen am Körper 101 des Forstarbeiters 100 ausgebildet. Die andere Ausgabeeinrichtung 80 ist zum Ausgeben der mindestens einen Information Info und zum Anordnen an dem Forstwerkzeug 110 ausgebildet. Das Forstwerkzeug 110 ist zum Verarbeiten des Abschnitts 92 ausgebildet. Im Detail weist das Forstwerkzeug 110 ein Schneidwerkzeug in Form einer, insbesondere motorangetriebenen, Säge auf. Des Weiteren weist das Forstgerät 20 eine nicht dargestellte Geräteübertragungseinrichtung auf und die mindestens eine Ausgabeeinrichtung 80 weist eine nicht dargestellte Ausgabeübertragungseinrichtung auf. Die Geräteübertragungseinrichtung und die Ausgabeübertragungseinrichtung sind zum Zusammenwirken miteinander und zum, insbesondere kabellosen, Übertragen der gemessenen geometrischen Kenngrößen GK und/oder der mindestens einen auf den gemessenen geometrischen Kenngrößen GK basierenden Information Info ausgebildet.

Außerdem weist das Forstgerätesystem 10 einen Schutzhelm 121, einen Gesichts- und/oder Gehörschutz 122, einen Schutzhandschuh 124 und eine Smartwatch 125 auf. Im gezeigten Ausführungsbeispiel ist die Ausgabeeinrichtung 80 an dem Schutzhelm 121 angeordnet. In alternativen Ausführungsbeispielen kann die Ausgabeeinrichtung zusätzlich oder alternativ an dem Gesichts- und/oder Gehörschutz, dem Schutzhandschuh und/oder der Smartwatch angeordnet sein. Weiter kann in alternativen Ausführungsbeispielen das Forstgerätesystem eine Schutzbrille, ein Armband oder einen Armreif aufweisen, an welchem/welcher die Ausgabeeinrichtung angeordnet sein kann.

Die Ausgabeeinrichtung 80, welche an dem Forstwerkzeug 110 angeordnet ist, weist eine Anzeige 81 auf.

Die Ausgabeeinrichtung 80, welche an dem Schutzhelm 121 angeordnet ist, weist eine Anzeige 81, eine Vibrationseinrichtung 82 und einen Schallerzeuger 83 auf. In alternativen Ausführungsbeispielen kann es ausreichen, wenn die Ausgabeeinrichtung entweder die Anzeige oder die Vibrationseinrichtung oder den Schallerzeuger aufweisen kann.

Im Detail weist das Forstgerätesystem 10 eine nicht dargestellte Kamera auf, die an dem Schutzhelm 121 angeordnet ist. Die Kamera ist zum optischen Erfassen des Abschnitts 92 ausgebildet. Insbesondere kann das Forstgerätesystem 10 beziehungsweise seine Kamera das ehemals obere, in Fig. 5 rechte, Ende des Abschnitts 92, an welchem der Baumzopf entfernt worden ist, Stellen, an welchen Äste entfernt worden sind, und die Oberflächenbeschaffenheit des Abschnitts 92 erkennen, insbesondere wiedererkennen.

Die mindestens eine Ausgabeeinrichtung 80 beziehungsweise seine Anzeige 81 ist dazu ausgebildet, mit der Kamera zusammenzuwirken und die mindestens eine Information Info in einem Sichtfeld des Forstarbeiters 100 anzuzeigen beziehungsweise in dieses zu projizieren oder einzublenden, insbesondere vor dem Abschnitt 92 an passender Position. Im Detail weist der Schutzhelm 121 ein Visier auf. Dem Forstarbeiter 100 wird bei einem Verarbeiten des Abschnitts 92, insbesondere bei einem Durchtrennen des Abschnitts 92 in mittels der Einteilungseinrichtung 60 eingeteilte Unterabschnitte 92-1, 92-2, 92-3 mittels des Forstwerkzeugs 110, die mindestens eine Information Info in Form von mindestens einer Schnittlinie für mindestens einen auszuführenden Trennschnitt zum Durchtrennen des Abschnitts 92 in dem Visier in seinem Sichtfeld vor dem Abschnitt 92 angezeigt.

Des Weiteren ist/sind die Ausgabeeinrichtung 80 beziehungsweise seine Vibrationseinrichtung 82 und sein Schallerzeuger 83 jeweils dazu ausgebildet, mit der Kamera zusammenzuwirken und die mindestens eine Information Info für eine passende Position des Forstwerkzeugs 110 am Abschnitt 92 zum Verarbeiten von diesem an den Forstarbeiter 100 auszugeben.

Außerdem ist die Ausgabeeinrichtung 80, welche an dem Forstwerkzeug 110 angeordnet ist, beziehungsweise seine Anzeige 81 dazu ausgebildet, mit der Kamera zusammenzuwirken und die mindestens eine Information Info für eine passende Position des Forstwerkzeugs 110 am Abschnitt 92 zum Verarbeiten von diesem an den Forstarbeiter 100 auszugeben.

Somit kann der Forstarbeiter 100 unterbrechungslos, insbesondere ohne das Forstwerkzeug 110 aus der Hand legen zu müssen, den Abschnitt 92 verarbeiten, insbesondere in die eingeteilten Unterabschnitte 92-1, 92-2, 92-3 durchtrennen.

Wie die gezeigten und oben erläuterten Ausführungsbeispiele deutlich machen, stellt die Erfindung ein vorteilhaftes Forstgerätesystem bereit, das verbesserte Eigenschaften aufweist, insbesondere mehr Funktionalitäten. Insbesondere ermöglicht das Forstgerätesystem eine Aushaltungsermittlung.

## Patentansprüche

1. Forstgerätesystem (10), aufweisend:
- ein Forstgerät (20), das
- eine Bewegungseinrichtung (30), die zum selbstständigen Bewegen des Forstgeräts entlang mindestens eines Abschnitts (92) eines stehenden Baumstamms (91) ausgebildet ist, wobei das Forstgerät nicht an einem Auslegearm entlang des Abschnitts bewegt ist, und
- ein Bearbeitungswerkzeug (40) aufweist, das zum Bearbeiten des Abschnitts ausgebildet ist,
**dadurch gekennzeichnet,**
- **dass** das Forstgerät (20) eine Messeinrichtung (50) aufweist, die zum Messen von geometrischen Kenngrößen (GK) des Abschnitts ausgebildet ist,
- **dass** das Forstgerätesystem (10) zum Ausgeben und/oder zum Übertragen mindestens einer auf den gemessenen geometrischen Kenngrößen basierenden Information (Info) ausgebildet ist,
- **dass** die Messeinrichtung (50) mindestens ein optisches Messteil (51) aufweist, das zum optischen Messen der geometrischen Kenngrößen (GK) des Abschnitts (92) ausgebildet ist, und
- **dass** das Forstgerätesystem (10) zum Erfassen einer Verteilung von Ästen (93) an dem Abschnitt (92) mittels der Messeinrichtung (50) und/oder des Schneidwerkzeugs (41) ausgebildet ist.

2. Forstgerätesystem (10) nach Anspruch 1,
- wobei das Bearbeitungswerkzeug (40) ein Schneidwerkzeug (41) aufweist, das zum Entfernen von Ästen (93) von dem Abschnitt (92) ausgebildet ist.

3. Forstgerätesystem (10) nach Anspruch 2,
- wobei das Schneidwerkzeug (41) eine Säge (42) aufweist.

4. Forstgerätesystem (10) nach einem der vorhergehenden Ansprüche,
- wobei die geometrischen Kenngrößen (GK) mindestens eine Länge (L1, L2, L3, L4), mindestens einen Durchmesser (D1x, D1y, D2, D3, D4, D5), mindestens einen Umfang (U1), mindestens eine Ovalität (O1), mindestens eine Krümmung (K1, K2, K3, K4, K5) und/oder mindestens eine Kontur des Abschnitts (92) aufweisen.

5. Forstgerätesystem (10) nach einem der vorhergehenden Ansprüche, aufweisend:
- eine Einteilungseinrichtung (60), die zum Einteilen des Abschnitts (92) in Unterabschnitte (92-1, 92-2, 92-3) basierend auf den gemessenen geometrischen Kenngrößen (GK) und basierend auf Wertfaktoren (WF) ausgebildet ist, und
- wobei die mindestens eine Information (Info) die eingeteilten Unterabschnitte und/oder ihre Einteilung aufweist.

6. Forstgerätesystem (10) nach Anspruch 5,
- wobei die Einteilungseinrichtung (60) zum Einteilen des Abschnitts (92) in die Unterabschnitte (92-1, 92-2, 92-3) basierend auf der erfassten Verteilung von Ästen ausgebildet ist.

7. Forstgerätesystem (10) nach einem der vorhergehenden Ansprüche,
- wobei das Forstgerätesystem (10) dazu ausgebildet ist, die mindestens eine Information (Info) durch Versehen des Abschnitts (92) mit mindestens einer Markierung (MK-1, MK-2, MK-3) auszugeben.

8. Forstgerätesystem (10) nach Anspruch 7,
- wobei das Bearbeitungswerkzeug (40) dazu ausgebildet ist, den Abschnitt (92) mit der mindestens einen Markierung (MK-1, MK-2, MK-3) durch Bearbeiten von dem Abschnitt zu versehen.

9. Forstgerätesystem (10) nach Anspruch 7 oder 8, aufweisend:
- eine Farbaufbringeinrichtung (70), die zum Versehen des Abschnitts (92) mit der mindestens einen Markierung (MK-1, MK-2, MK-3) durch Aufbringen von Farbe (71) auf den Abschnitt ausgebildet ist.

10. Forstgerätesystem (10) nach einem der vorhergehenden Ansprüche, aufweisend:
- eine Ausgabeeinrichtung (80), die zum Ausgeben der mindestens einen Information (Info) und zum Tragen am Körper (101) eines Forstarbeiters (100) und/oder zum Anordnen an einem Forstwerkzeug (110) ausgebildet ist.

11. Forstgerätesystem (10) nach Anspruch 10, aufweisend:
- einen Schutzhelm (121), einen Gesichts- und/oder Gehörschutz (122), eine Schutzbrille, einen Schutzhandschuh (124), eine Smartwatch (125), ein Armband oder einen Armreif, an welchem/welcher die Ausgabeeinrichtung (80) angeordnet ist.

12. Forstgerätesystem (10) nach Anspruch 10 oder 11,
- wobei die Ausgabeeinrichtung (80) eine Anzeige (81), eine Vibrationseinrichtung (82) und/oder einen Schallerzeuger (83) aufweist.

## Claims

1. Forestry apparatus system (10) comprising:
- a forestry apparatus (20), which has
- a movement device (30) designed to independently move the forestry apparatus along at least one portion (92) of a standing tree trunk (91), wherein the forestry apparatus is not moved on an extension arm along the portion, and
- a processing tool (40) designed to process the portion,
**characterized**
- **in that** the forestry apparatus (20) comprises a measuring device (50) designed to measure geometric characteristics (GK) of the portion,
- **in that** the forestry apparatus system (10) is designed to output and/or to transmit at least one item of information (Info) based on the measured geometric characteristics,
- **in that** the forestry apparatus (50) comprises at least one optical measuring part (51) designed to optically measure the geometric characteristics (GK) of the portion (92), and
- **in that** the forestry apparatus system (10) is designed to detect a distribution of branches (93) on the portion (92) by means of the measuring device (50) and/or the cutting tool (41).

2. Forestry apparatus system (10) according to Claim 1,
- wherein the processing tool (40) comprises a cutting tool (41) designed to remove branches (93) from the portion (92).

3. Forestry apparatus system (10) according to Claim 2,
- wherein the cutting tool (41) comprises a saw (42).

4. Forestry apparatus system (10) according to one of the preceding claims,
- wherein the geometric characteristics (GK) include at least one length (L1, L2, L3, L4), at least one diameter (D1x, D1y, D2, D3, D4, D5), at least one circumference (U1), at least one ovality (01), at least one curvature (K1, K2, K3, K4, K5) and/or at least one contour of the portion (92).

5. Forestry apparatus system (10) according to one of the preceding claims, comprising:
- a classification device (60) designed to classify the portion (92) into sub-portions (92-1, 92-2, 92-3) on the basis of the measured geometric characteristics (GK) and on the basis of value factors (WF), and
- wherein the at least one item of information (Info) includes the classified sub-portions and/or their classification.

6. Forestry apparatus system (10) according to Claim 5,
- wherein the classification device (60) is designed to classify the portion (92) into the sub-portions (92-1, 92-2, 92-3) on the basis of the detected distribution of branches.

7. Forestry apparatus system (10) according to one of the preceding claims,
- wherein the forestry apparatus system (10) is designed to output the at least one item of information (Info) by providing the portion (92) with at least one marking (MK-1, MK-2, MK-3).

8. Forestry apparatus system (10) according to Claim 7,
- wherein the processing tool (40) is designed to provide the portion (92) with the at least one marking (MK-1, MK-2, Mk-3) by processing the portion.

9. Forestry apparatus system (10) according to Claim 7 or 8, comprising:
- a paint application device (70) designed to provide the portion (92) with the at least one marking (MK-1, MK-2, MK-3) by applying paint (71) to the portion.

10. Forestry apparatus system (10) according to one of the preceding claims, comprising:
- an output device (80) designed to output the at least one item of information (Info) and to be worn on the body (101) of a forestry worker (100) and/or to be arranged on a forestry tool (110).

11. Forestry apparatus system (10) according to Claim 10, comprising:
- a protective helmet (121), a face shield and/or ear protectors (122), safety goggles, a protective glove (124), a smartwatch (125), an armband or a wristband, on which the output device (80) is arranged.

12. Forestry apparatus system (10) according to Claim 10 or 11,
- wherein the output device (80) has a display (81), a vibration device (82) and/or a sound generator (83).

## Revendications

1. Système (10) formant appareil forestier, comprenant :
- un appareil forestier (20), qui comprend
- un dispositif de déplacement (30), qui est conçu pour déplacer de manière autonome l'appareil forestier le long d'au moins une portion (92) d'un tronc d'arbre sur pied (91), l'appareil forestier ne se déplaçant pas sur un bras de support le long de la portion, et
- un outil de traitement (40), qui est conçu pour traiter la portion,
**caractérisé**
- **en ce que** l'appareil forestier (20) comprend un dispositif de mesure (50) qui est conçu pour mesurer des caractéristiques géométriques (GK) de la portion,
- **en ce que** le système (10) formant appareil forestier est conçu pour émettre et/ou pour transmettre au moins une information (Info) basée sur les caractéristiques géométriques mesurées,
- **en ce que** le dispositif de mesure (50) présente au moins une partie (51) de mesure optique qui est conçue pour mesurer optiquement les caractéristiques géométriques (GK) de la portion (92), et
- **en ce que** le système (10) formant appareil forestier est conçu pour détecter une répartition de branches (93) sur la portion (92) au moyen du dispositif de mesure (50) et/ou de l'outil de coupe (41).

2. Système (10) formant appareil forestier selon la revendication 1,
- dans lequel l'outil de traitement (40) comprend un outil de coupe (41) conçu pour retirer les branches (93) de la portion (92).

3. Système (10) formant appareil forestier selon la revendication 2,
- dans lequel l'outil de coupe (41) comprend une scie (42) .

4. Système (10) formant appareil forestier selon l'une des revendications précédentes,
- dans lequel les caractéristiques géométriques (GK) comprennent au moins une longueur (L1, L2, L3, L4), au moins un diamètre (D1x, D1y, D2, D3, D4, D5), au moins une circonférence (U1), au moins une ovalité (01), au moins une courbure (K1, K2, K3, K4, K5) et/ou au moins un contour de la portion (92).

5. Système (10) formant appareil forestier selon l'une des revendications précédentes, comprenant :
- un dispositif de division (60) configuré pour diviser la portion (92) en sous-portions (92-1, 92-2, 92-3) sur la base des caractéristiques géométriques mesurées (GK) et sur la base de facteurs de valeur (WF), et
- dans lequel ladite au moins une information (Info) comprend les sous-portions divisées et/ou les divisions de celles-ci.

6. Système (10) formant appareil forestier selon la revendication 5,
- dans lequel le dispositif de division (60) est conçu pour diviser la portion (92) en sous-portions (92-1, 92-2, 92-3) sur la base de la répartition détectée des branches.

7. Système (10) formant appareil forestier selon l'une des revendications précédentes,
- dans lequel le système (10) formant appareil forestier est conçu pour délivrer ladite au moins une information (Info) en dotant la portion (92) d'au moins un marquage (MK-1, MK-2, MK-3).

8. Système (10) formant appareil forestier selon la revendication 7,
- dans lequel l'outil de traitement (40) est adapté pour, en traitant la portion, appliquer ledit au moins un marquage (MK-1, MK-2, MK-3) sur la portion (92).

9. Système (10) formant appareil forestier selon la revendication 7 ou la revendication 8, comprenant :
- un dispositif (70) d'application de peinture configuré pour doter la portion (92) dudit au moins un marquage (MK-1, MK-2, MK-3) en appliquant de la peinture (71) sur la portion.

10. Système (10) formant appareil forestier selon l'une des revendications précédentes, comprenant :
- un dispositif de sortie (80) configuré pour délivrer ladite au moins une information (Info) et pour être porté sur le corps (101) d'un ouvrier forestier (100) et/ou pour être placé sur un appareil forestier (110).

11. Système (10) formant appareil forestier selon la revendication 10, comprenant :
- un casque de protection (121), une protection faciale et/ou auditive (122), des lunettes de protection, un gant de protection (124), une montre intelligente (125), un bracelet ou un brassard sur lequel est agencé le dispositif de sortie (80).

12. Système (10) formant appareil forestier selon la revendication 10 ou la revendication 11,
- dans lequel le dispositif de sortie (80) comprend un afficheur (81), un dispositif vibrant (82) et/ou un générateur de sons (83).
